# EUROPÄISCHE PATENTANMELDUNG

(11) **EP 3 108 952 A1**
(43) Veröffentlichungstag der Anmeldung: **28.12.2016**
(21) Anmeldenummer: 16020230.5
(22) Anmeldetag: 14.06.2016
(51) Int. Cl.: B01D 50/00

(54) **LUFTREINIGER**

(30) Priorität: 24.06.2015 DE 202015103330 U
(71) Anmelder: ESTA Apparatebau GmbH & Co. KG, 89250 Senden (DE)
(72) Erfinder: Frank, Bernhard, 89264 Weißenhorn (DE); Novosel, Michael, 89522 Heidenheim (DE)
(74) Vertreter: Meyer, Thorsten

(57) **Zusammenfassung**

Die Erfindung betrifft einen Luftreiniger (1) mit einem Prozessraum (2) in welchem wenigstens eine Luftfiltereinheit (3) angeordnet ist, wobei Luft aus dem Prozessraum (2) durch die wenigstens eine Luftfiltereinheit (3) über wenigstens eine Prozessraum-Öffnung (4) an der Prozessraum-Decke (5) abgeführt wird, wobei die Luftfiltereinheit (3) an der Prozessraum-Decke (5) in einer Führung (6) gehaltert ist, wobei Vorsprünge (7) an der Luftfiltereinheit (3) an wenigstens einer Führungsschiene (8) hintergreifen und so die Luftfiltereinheit (3) dichtend um die Prozessraum-Öffnung (4) gegen die Prozessraum-Decke (5) gehaltert werden kann, wobei die Führungsschiene (8) zu einer Seite hin von der Prozessraum-Decke (5) absenkbar ausgestaltet ist, so dass die Luftfiltereinheit (3) von der Prozessraum-Decke (5) abschwenkbar ist und aus der Führungsschiene (8) herausziehbar ist.

## Beschreibung

Die Erfindung betrifft einen Luftreiniger mit einem Prozessraum in welchem wenigstens eine Luftfiltereinheit angeordnet ist.

Bei industriellen Luftreinigern sind Luftfiltereinheiten in dem Prozessraum eines solchen Luftreinigers angeordnet. Die Luftfiltereinheiten sind dabei relativ groß und möglicherweise durch Filtrat verunreinigt. Bisher müssen solche Luftfiltereinheiten umständlich im Prozessraum aus deren Befestigungen lösen, wobei durch möglicherweise gesundheitsschädliches oder verunreinigendes Filtrat erhöhte Vorsicht und umständliche Arbeitsschritte von Nöten waren.

Aus der US 5,961,696 ist ein Staubsammelgerät bekannt, welches in einem Filter aufnehmenden Raum gegenüberliegende ein horizontales ein und Ausschieben der Filter ermöglichendes Führungsschienen aufweist, wobei ein zusätzliches klingenförmiges Spannelement die Auskragung des Filterelements zu deren Fixierung gegen die Raumdecke drückt.

Aufgabe der Erfindung ist es einen verbesserten Luftreiniger zur Verfügung zu stellen, bei dem ein Wechsel einer Luftfiltereinheit erleichtert ist.

Diese Aufgabe wird durch einen Luftreiniger nach den Merkmalen des Anspruchs 1 gelöst.

Erfindungsgemäß ist ein Luftreiniger mit einem Prozessraum in welchem wenigstens eine Luftfiltereinheit angeordnet ist, wobei Luft aus dem Prozessraum durch die wenigstens eine Luftfiltereinheit über wenigstens eine Prozessraum-Öffnung an der Prozessraum-Decke abgeführt wird, vorgeschlagen, wobei die Luftfiltereinheit an der Prozessraum-Decke in einer Führung gehaltert ist, wobei Vorsprünge an der Luftfiltereinheit an wenigstens einer Führungsschiene hintergreifen und so die Luftfiltereinheit dichtend um die Prozessraum-Öffnung gegen die Prozessraum-Decke gehaltert werden kann, wobei die Führungsschiene zu einer Seite hin von der Prozessraum-Decke absenkbar ausgestaltet ist, wobei die Führungsschiene an einem Ende an der Prozessraum-Decke angelenkt ist und wenigstens an ihrem anderen Ende vermittels einem an der Prozessraum-Decke gelagerten Gewindespannelement von der Prozessraum-Decke abgesenkt werden kann, so dass die die Luftfiltereinheit von der Prozessraum-Decke abschwenkbar ist und aus der Führungsschiene entlang der zu einer Seite hin von der Prozessraum-Decke absenkten Führungsschiene herausziehbar istst. Hierdurch ist auf besonders effektive Weise ein Wechsel der Luftfiltereinheit dadurch ermöglicht, dass diese einfach in der nach einer Seite hin abgesenkten Schiene herausgezogen werden kann. Zuvor kann es sinnvoll sein, dass über den zugänglichen Teil des Filters eine Folie gezogen wird.

Bevorzugterweise ist die Luftfiltereinheit gegen die Prozessraum-Decke um die Prozessraum-Öffnung mit einer Dichtung gegen den Prozessraum abgedichtet. Diese Ausgestaltung ist daher so vorteilhaft, da die Schiene im nicht abgesenkten Zustand die Luftfiltereinheit gegen die Prozessraum-Decke zieht.

Von Vorteil ist vorgesehen, dass die Führungsschiene vermittels einem an der Prozessraum-Decke gelagerten Gewindespannelement von der Prozessraum-Decke abgesenkt werden kann.

Die Luftfiltereinheit kann gemäß einer Ausgestaltung der Erfindung durch wenigstens ein von der Prozessraum-Decke hängendes Filterelement ausgebildet ist. Dies kann beispielsweise auch ein Rundfilter sein.

Bevorzugterweise ist der Prozessraum auf der Seite der Führungsschiene an der diese absenkbar ist vermittels einer Klappe öffenbar.

Nachfolgend wird die Erfindung anhand der Zeichnungen weiter erläutert. Im Einzelnen zeigt die schematische Darstellung in:
- Fig. 1: eine schematische Darstellung eines erfindungsgemäßen Luftreinigers mit geöffneter Klappe,
- Fig. 2: den Luftreiniger aus Fig. 1 in einer Ansicht von schräg oben,
- Fig. 3: eine Schnitt-Detaildarstellung der eingesetzten Luftfiltereinheiten im Luftreiniger,
- Fig. 4: eine Schnitt-Detaildarstellung des Luftreiniger mit abgesenkter Führungsschiene,
- Fig. 5: eine Schnitt-Detaildarstellung des Luftreiniger mit teilweise herausgezogener Luftfiltereinheit,
- Fig. 6: eine Schnitt-Detaildarstellung des Luftreiniger mit teilweise herausgezogener Luftfiltereinheit aus einer anderen Blickrichtung,
- Fig. 7: eine Detaildarstellung der abgesenkten Führungsschiene und teilweise herausgezogener Luftfiltereinheit entsprechend Fig. 6, und
- Fig. 8: eine weitere Detaildarstellung der abgesenkten Führungsschiene und teilweise herausgezogener Luftfiltereinheit entsprechend Fig. 6 aus einer anderen Blickrichtung.

Die in den Figuren gleichen Bezugsziffern bezeichnen gleiche oder gleich wirkende Elemente.

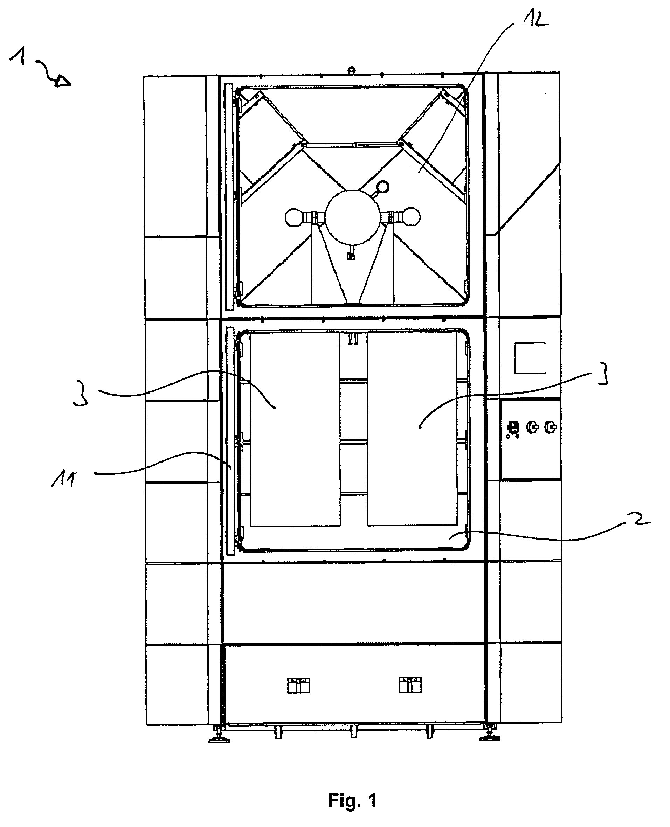

Fig. 1 zeigt eine schematische Darstellung eines erfindungsgemäßen Luftreinigers 1 mit geöffneter Klappe 11 und mit einem Prozessraum 2 in welchem mehrere von der Prozessraum-Decke 5 hängende Luftfiltereinheiten 3 angeordnet sind. Das Gebläse 12 über welches die partikelbelastete Luft über die Luftfiltereinheiten 3 aus dem Prozessraum 2 abgezogen wird ist auch ersichtlich.

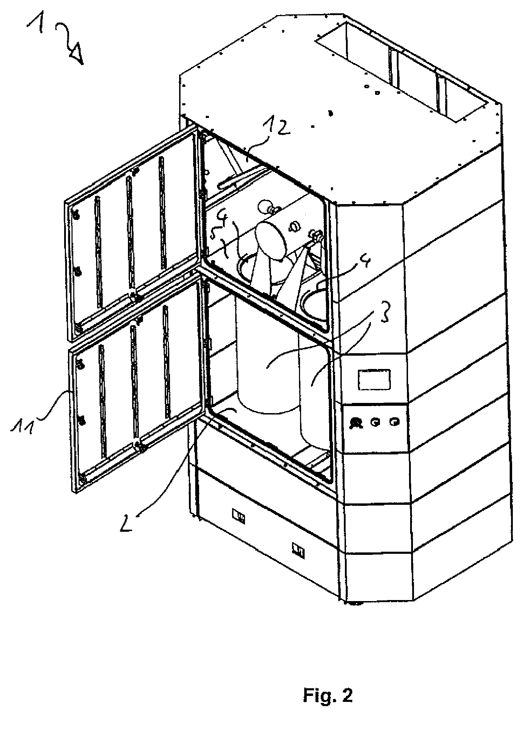

In Fig. 2 ist einer Ansicht von schräg oben auf den Luftreiniger 1, in dieser Ansicht ist die den Prozessraum 2 begrenzende Prozessraum-Decke 5 mit deren Prozessraum-Öffnungen 4 zu sehen.

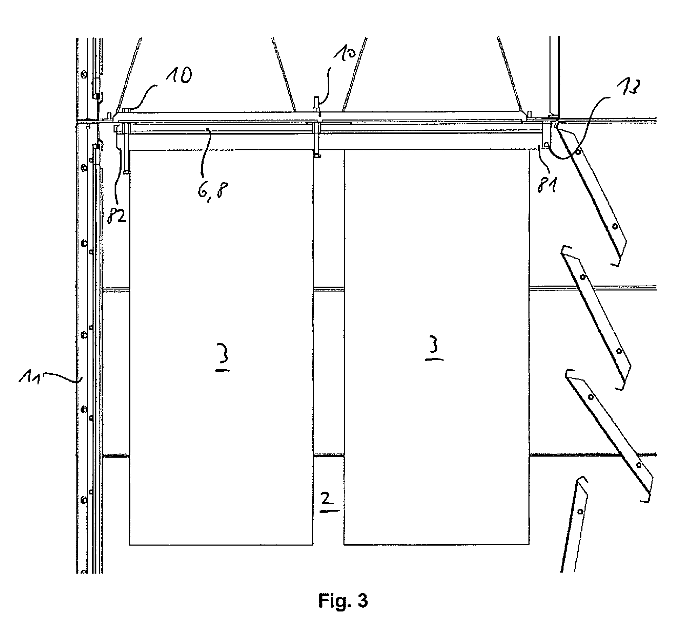

Eine detaillierte Schnittdarstellung gemäß Fig. 3 zeigt die eingesetzten Luftfiltereinheiten 3 an der Prozessraum-Decke 5, die vermittels einer Führung 6 gehaltert sind.

Hierzu weist die Führung 6 eine Führungsschiene 8 auf, die an einem Ende 81 an der Prozessraum-Decke 5 angelenkt 13 ist und an ihrem anderen Ende 82 vermittels wenigstens einem an der Prozessraum-Decke 5 gelagerten Gewindespannelement 10 von der Prozessraum-Decke 5 abgesenkt werden kann.

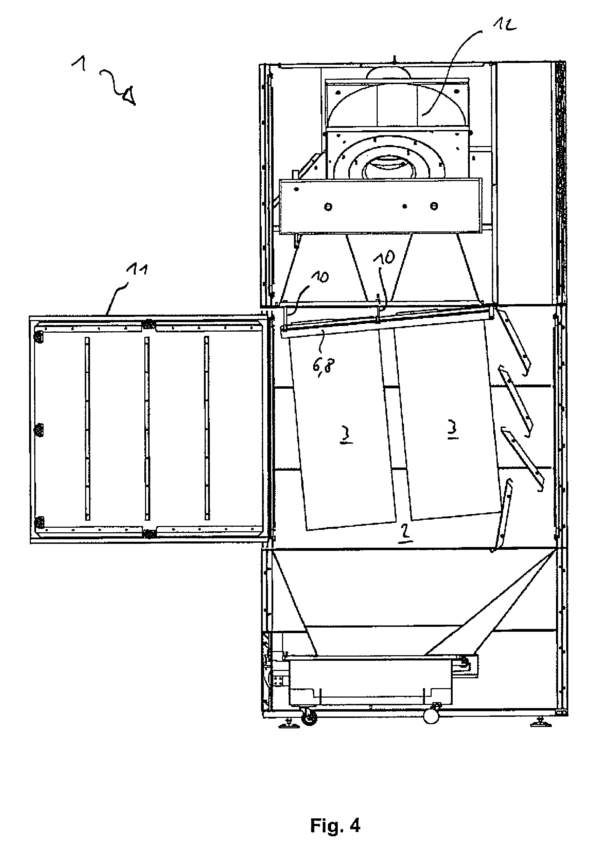

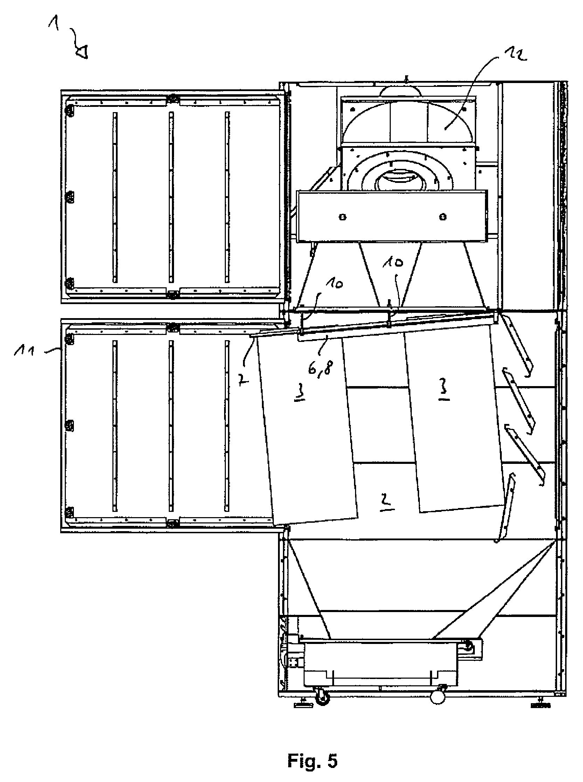

Diese Absenkung durch lösen der Gewindespannelemente 10 ist in Fig. 4 näher dargestellt. Die Luftfiltereinheiten 3 werden zusammen mit der Führungsschiene 8 von der Prozessraum-Decke 5 abgeschwenkt und sind so, wie in Fig. 5 gezeigt aus der Führungsschiene 8 herausziehbar.

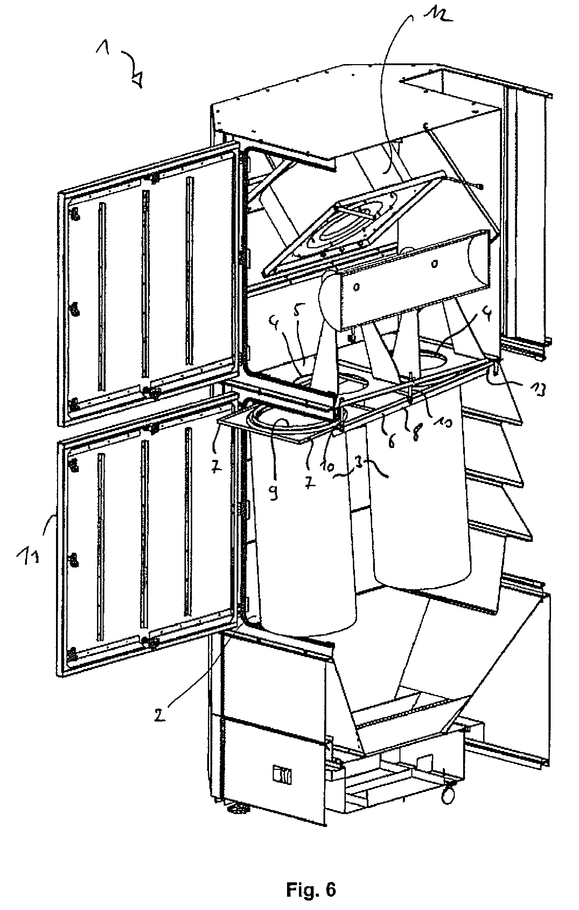

Fig. 6 zeigt in einer schematischen Schnittdarstellung die selbe Situation wie Fig. 5. Hierbei sind die Vorsprünge 7 an der Luftfiltereinheit 3 die an den Führungsschienen 8 hintergreifen abermals gezeigt. Durch anziehen der Gewindespannelemente 10 können die Luftfiltereinheiten 3 gut dichtend um die Prozessraum-Öffnung 4 gegen die Prozessraum-Decke 5 gehaltert werden. Die Abdichtung gegen den Prozessraum 2 wird dabei noch durch die Dichtung 9, die um die Prozessraum-Öffnung 4 gegen die Prozessraum-Decke 5 gedrückt wird, erhöht.

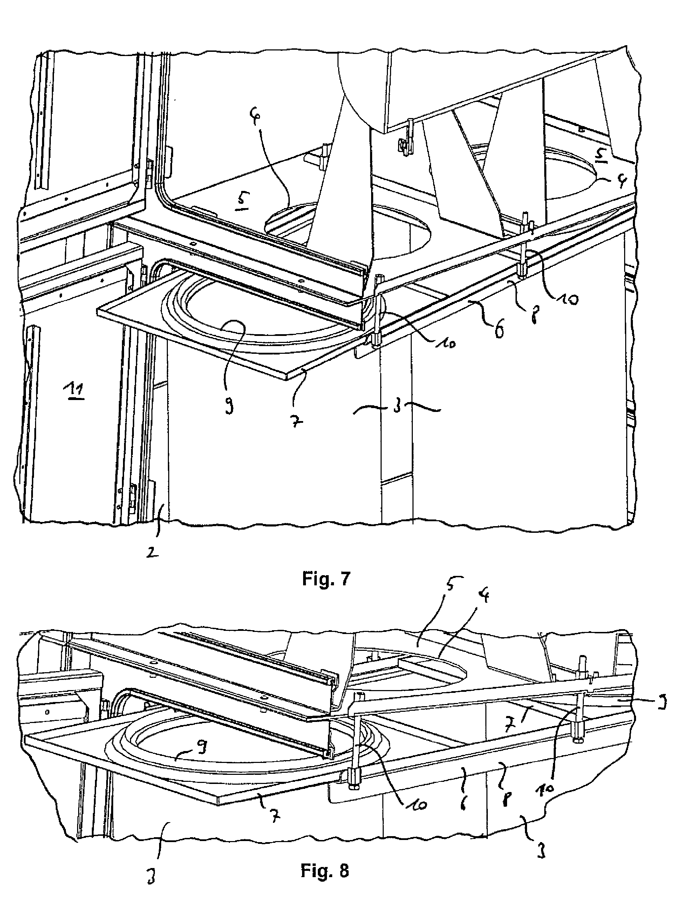

Dir Fig. 7 und 8 zeigen in weiteren Details die vermittels der Gewindespannelemente 10 abgesenkte Führungsschiene 8 - jeweils beidseitig der Luftfiltereinheiten 3 ausgeführt - mit teilweise herausgezogenen Luftfiltereinheiten 3, diese sind im Beispiel als Rundfilter ausgeführt.

### Bezugszeichenliste

- 1: Luftreiniger
- 2: Prozessraum
- 3: Luftfiltereinheit
- 4: Prozessraum-Öffnung
- 5: Prozessraum-Decke
- 6: Führung
- 7: Vorsprung
- 8: Führungsschiene
- 9: Dichtung
- 10: Gewindespannelement
- 11: Klappe
- 12: Gebläse
- 13: Anlenkung

## Patentansprüche

1. Luftreiniger (1) mit einem Prozessraum (2) in welchem wenigstens eine Luftfiltereinheit (3) angeordnet ist,
wobei Luft aus dem Prozessraum (2) durch die wenigstens eine Luftfiltereinheit (3) über wenigstens eine Prozessraum-Öffnung (4) an der Prozessraum-Decke (5) abgeführt wird, dass die Luftfiltereinheit (3) an der Prozessraum-Decke (5) in einer Führung (6) gehaltert ist,
**dadurch gekennzeichnet,**
**dass** Vorsprünge (7) an der Luftfiltereinheit (3) an wenigstens einer Führungsschiene (8) hintergreifen und so die Luftfiltereinheit (3) dichtend um die Prozessratim-Öffnung (4) gegen die Prozessraum-Decke (5) gehaltert werden kann,
wobei die Führungsschiene (8) zu einer Seite hin von der Prozessraum-Decke (5) absenkbar ausgestaltet ist,
wobei die Führungsschiene (8) an einem Ende (81) an der Prozessraum-Decke (5) angelenkt (13) ist und wenigstens an ihrem anderen Ende (82) von der Prozessraum-Decke (5) abgesenkt werden kann,
so dass die Luftfiltereinheit (3) von der Prozessraum-Decke (5) abschwenkbar ist und aus der Führungsschiene (8) entlang der zu einer Seite hin von der Prozessraum-Decke (5) absenkten Führungsschiene (8) herausziehbar ist.

2. Luftreiniger nach Anspruch 1,
**dadurch gekennzeichnet,**
**dass** die Luftfiltereinheit (3) gegen die Prozessraum-Decke (5) um die Prozessraum-Öffnung (4) mit einer Dichtung (9) gegen den Prozessraum (2) abgedichtet ist.

3. Luftreiniger nach Anspruch 1 oder 2,
**dadurch gekennzeichnet,**
**dass** die Führungsschiene (8)vermittels einem an der Prozessraum-Decke (5) gelagerten Gewindespannelement (10) von der Prozessraum-Decke (5) abgesenkt werden kann.

4. Luftreiniger nach Anspruch 1 oder 2 oder 3,
**dadurch gekennzeichnet,**
**dass** die Luftfiltereinheit (3) durch wenigstens ein von der Prozessraum-Decke (5) hängendes Filterelement ausgebildet ist.

5. Luftreiniger nach einem der Ansprüche 1 bis 4,
**dadurch gekennzeichnet,**
**dass** der Prozessraum (2) auf der Seite der Führungsschiene an der diese absenkbar ist vermittels einer Klappe (11) öffenbar ist.
